(19) Europäisches Patentamt

European Patent Office

Office européen des brevets

(11) **EP 1 369 940 A1**

(12) **EUROPEAN PATENT APPLICATION**
published in accordance with Art. 158(3) EPC

(43) Date of publication:
**10.12.2003 Bulletin 2003/50**

(51) Int Cl.⁷: **H01M 4/58**, H01M 4/02,
H01M 10/40

(21) Application number: **02705175.4**

(22) Date of filing: **14.03.2002**

(86) International application number:
**PCT/JP02/02408**

(87) International publication number:
**WO 02/073719 (19.09.2002 Gazette 2002/38)**

(84) Designated Contracting States:
**AT BE CH CY DE DK ES FI FR GB GR IE IT LI LU MC NL PT SE TR**

(30) Priority: **14.03.2001 JP 2001073184**

(71) Applicant: **Sony Corporation**
**Tokyo 141-0001 (JP)**

(72) Inventors:
• **AKASHI, Hiroyuki, c/o Sony Corporation**
**Shinagawa-ku, Tokyo 141-0001 (JP)**
• **SHIBAMOTO, Gorou, c/o Sony Corporation**
**Shinagawa-ku, Tokyo 141-0001 (JP)**
• **ADACHI, Momoe, c/o Sony Corporation**
**Shinagawa-ku, Tokyo 141-0001 (JP)**
• **FUJITA, Shigeru, c/o Sony Corporation**
**Shinagawa-ku, Tokyo 141-0001 (JP)**

(74) Representative: **Müller, Frithjof E., Dipl.-Ing.**
**Müller Hoffmann & Partner**
**Patentanwälte**
**Innere Wiener Strasse 17**
**81667 München (DE)**

(54) **POSITIVE ELECTRODE MATERIAL AND BATTERY COMPRISING IT**

(57) It is the object of the invention to provide a cathode material capable of improving charge-and-discharge cycle characteristics and a battery using the cathode material. A rolled electrode body (20) is provided, the rolled electrode body being comprised of a strip-shaped cathode (21) and a strip-shaped anode (22) with a separator (23) sandwiched in-between. Lithium metal precipitates on the anode (22) in the middle of charge, and a capacity of the anode (22) is expressed by a sum of a capacity component obtained through insertion and extraction of lithium and a capacity component obtained through precipitation and dissolution of lithium. The cathode (21) includes lithium-containing oxide as the cathode material capable of insertion and extraction of lithium, which is expressed in a chemical formula $Li_xMI_{1-y}MII_yO_2$. MI corresponds to Co or Ni, and MII corresponds to a transition metal element except for MI. Therefore, charge-and-discharge cycle characteristics can be improved.

FIG. 1

**Description**

TECHNICAL FIELD

The present invention relates to a battery comprising a cathode, an anode and an electrolyte, and a cathode material used in the battery, especially relates to the battery in which a capacity of the anode includes the sum of a capacity component obtained through insertion and extraction of lithium and a capacity component obtained through precipitation and dissolution of lithium, and the cathode material used therein.

BACKGROUND ART

Recently, portable electronic equipments such as a camcorder (videotape recorder), a cellular phone, a laptop computer become widespread, and reductions in size and weight, and longtime-continuous-playing of the portable electronic equipments are strongly in demand. With this being the situation, high capacity and high energy density of a secondary battery as a portable power source for the portable electronic equipments are highly expected.

A lithium-ion secondary battery where an anode is made of a material capable of insertion and extraction of lithium (Li) such as a carbon material, and a lithium secondary battery where an anode is made of a lithium metal are taken as examples of secondary batteries capable of high energy density. Above all, the lithium metal used in the lithium secondary battery has 2054 mAh /cm$^3$ in theoretical electrochemical equivalent, which corresponds to 2.5 times as large as the graphite material used in the lithium-ion secondary battery, therefore, it is expected that the lithium secondary battery can obtain higher energy density than the lithium-ion secondary battery. Heretofore, many researchers have researched and studied the lithium secondary battery for its practical use (for example, Lithium Batteries, Edited by Jean-Paul Gabano, Academic Press (1983)).

However, there is a problem that the lithium secondary battery is in difficulty for its practical use due to its large deterioration of discharge capacity at the occasion of executing charge-and-discharge repeatedly. The deterioration of discharge capacity attributes to the application of the reaction of precipitation and dissolution of the lithium metal in the anode of the lithium secondary battery. Namely, according to charge-and-discharge, the volume of the anode is increased or decreased by the amount of the capacity corresponding with lithium-ions migrating between the cathode and the anode, therefore, the volume of the anode changes considerably, thereby makes the reversible progresses of reactions of dissolution and recrystallization of lithium metal crystals difficult. Moreover, the higher energy density is to be realized, the larger the volume of the anode changes, and the deterioration of the capacity becomes much worse.

The inventors of the invention of the application has newly developed a secondary battery in which the capacity of the anode is expressed by the sum of a capacity component obtained through insertion and extraction of lithium and a capacity component obtained through precipitation and dissolution of lithium. The anode of the secondary battery is made of a carbon material capable of insertion and extraction of lithium so as to precipitate lithium on a surface of the carbon material in the middle of charge. According to the secondary battery, it is expected that charge-and-discharge cycle characteristics can be improved, while obtaining high energy density. However, it is necessary to further improve and stabilize charge-and-discharge cycle characteristics in order to make the secondary battery practical, and it is essential to research and develop not only the anode but also the cathode. Especially, the composition of the cathode material is important in terms of improving charge-and-discharge cycle characteristics.

The present invention has been achieved in view of the above problems. It is an object of the invention to provide a cathode material capable of improving a property of a battery, and a battery using the same.

DISCLOSURE OF THE INVENTION

A cathode material according to the invention is used in a battery comprising a cathode, an anode and an electrolyte where the capacity of the anode includes a sum of a capacity component obtained through insertion and extraction of lithium (Li) and a capacity component obtained through precipitation and dissolution of lithium, wherein the cathode material contains lithium-containing oxide, which includes lithium, a first element consisting of either cobalt (Co) or nickel (Ni), a second element that is at least one kind from a group consisting of a transition metal element except for the first element, and oxygen (O).

A battery according to the invention comprises a cathode, an anode and an electrolyte, wherein the capacity of the anode includes a sum of a capacity component obtained through insertion and extraction of lithium and a capacity component obtained through precipitation and dissolution of lithium, and the cathode contains lithium-containing oxide, which includes lithium, a first element consisting of either cobalt or nickel, a second element that is at least one kind from the group consisting of a transition metal element except for the first element, and oxygen.

The cathode material of the invention contains lithium-containing oxide, which includes the first element consisting of either cobalt or nickel and the second element that is at least one kind from the group consisting of a transition metal element except for the first element. And, the battery of the invention uses the cathode material of the invention, thereby excellent cycle characteristics can be obtained.

Other and further objects, features and advantages of the invention will appear more fully from the following description.

BRIEF DESCRIPTION OF THE DRAWINGS

FIG.1 is a cross section to illustrate a construction of a secondary battery according to an embodiment of the invention.
FIG.2 is a partly enlarged cross section to illustrate a part of a rolled electrode body in the secondary battery shown in FIG.1.

BEST MODE FOR CARRYING OUT THE INVENTION

Embodiments of the present invention will be described in detail with reference to drawings.

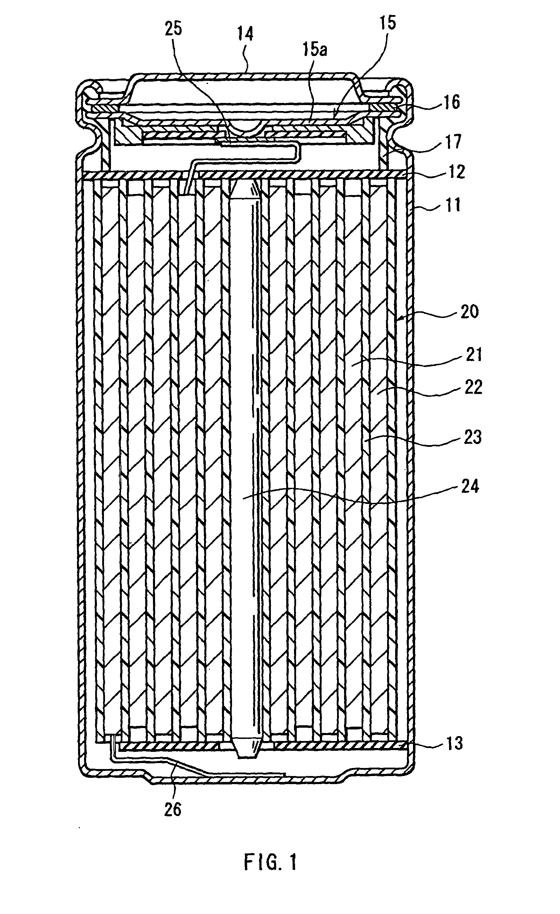

FIG.1 shows a cross section of a secondary battery according to an embodiment of the present invention. The shape of the secondary battery is so-called a jelly roll. The secondary battery includes a rolled electrode body 20 in a battery can 11 with a hollow cylindrical column shape, the rolled electrode body 20 including strip-shaped cathode 21 and anode 22 winding around with a separator 23 in between. The battery can 11 is made of iron plated with nickel, for example, and has a structure so as to have one end of the battery can 11 opened and to have the other thereof closed. In the battery can 11, a pair of an insulating plate 12 and an insulating plate 13 are respectively disposed in a vertical direction with respect to the peripheral surface of the winding so as to sandwich the rolled electrode body 20 in between.

A battery cover 14, a safety valve mechanism 15 and a positive temperature coefficient device (PTC device) 16 provided inside the battery cover 14 are attached to an opening end of the battery can 11 by caulking through a gasket 17, and the inside of the battery can 11 is sealed. The battery cover 14 is made of the same material as the battery can 11, for example. The safety valve mechanism 15 is electrically coupled to the battery cover 14 through the PTC device 16. When an internal short circuit occurs or the internal pressure of the battery increases to a certain value or higher due to heating from outside or the like, a disk plate 15a is flipped, thereby disconnecting the electrical connection between the battery cover 14 and the rolled electrode body 20. The PTC device 16 is used to limit a current with use of an increase in resistance value when the temperature is increased, thereby preventing an abnormal heating caused by large current. The PTC device 16 is made of, for example, barium titanate based semiconductor ceramics. The gasket 17 is made of, for example, an insulating material, and the surface of the gasket 17 is applied with asphalt.

The rolled electrode body 20 is rolled around a center pin 24 as a center. The cathode 21 of the rolled electrode body 20 is coupled to a cathode lead 25 made of such as aluminum. The anode 22 of the rolled electrode body 20 is coupled to an anode lead 26 made of such as nickel. The cathode lead 25 is electrically coupled to the battery cover 14 by being welded to the safety valve mechanism 15, while the anode lead 26 is electrically coupled to the battery can 11 by being welded to the battery can 11.

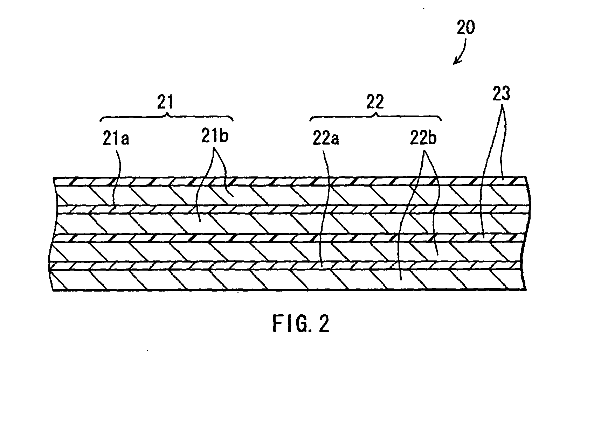

FIG.2 shows an enlarged view of a part of the rolled electrode body 20 shown in FIG.1. The cathode 21 has a structure, for example, in which a cathode mixture layer 21b is provided on both surfaces of a cathode current collector 21a with a pair of facing surfaces. Although not shown in Figures, the cathode mixture layer 21b may be provided on only one facing surface of the cathode current collector 21a. The cathode current collector 21a has thickness in a approximate range between 5 μm and 50 μm for example, and is made of metal foil such as aluminum foil, nickel foil, stainless foil or the like. The cathode mixture layer 21b has thickness in a range between 80 μm and 250 μm, and is made so as to include a cathode material capable of insertion and extraction of lithium. Besides, when the cathode mixture layer 21b is provided on both surfaces of the cathode current collector 21a, the thickness of the cathode mixture layer 21b is equal to the sum of the thickness of the cathode mixture layers 21b provided on both surfaces of the cathode current collector 21a.

The cathode material capable of insertion and extraction of lithium contains one or two or more of a lithium-containing oxide that is expressed in Chemical Formula 1. The lithium-containing oxide contains lithium, a first element that is made of either cobalt or nickel, a second element that is at least one kind selected from the group consisting of transition metal elements except for the first element and oxygen, and a part of cobalt or nickel contained in either a lithium cobalt oxide or a lithium nickel oxide is substituted with another element. Therefore, according to the embodiment of the invention, charge-and-discharge cycle characteristics can be improved.

(Chemical Formula 1)

$$Li_xMI_{1-y}MII_yO_2$$

In Chemical Formula 1, MI indicates the first element and MII indicates the second element. Small letters x and y are preferably within a range of $0.2 < x \leqq 1.2$ and within a range of $0 < y \leqq 0.1$ respectively, because superior charge-and-discharge cycle characteristics can be obtained within the above-mentioned ranges. A composition of oxygen is obtained under stoichiometry, however, the composition may deviate from the composition obtained under stoichiometry.

It is preferable to include at least one kind selected from the group consisting of magnesium (Mg), aluminum (Al), manganese (Mn), cobalt, nickel, iron (Fe), titanium (Ti), niobium (Nb), zirconium (Zr), molybdenum (Mo) and tungsten (W) as the second element. Among them, it is more preferable to include at least one kind selected from the group consisting of magnesium and aluminum, so that more excellent effects can be obtained.

Preferable examples of such lithium-containing oxides that mentioned above are $LiCo_{0.98}Al_{0.01}Mg_{0.01}O_2$, $LiCo_{0.99}Al_{0.01}O_2$ or $LiCo_{0.99}Mg_{0.01}O_2$.

The cathode material capable of insertion and extraction of lithium may include one kind or more of another cathode material, plus the above-mentioned lithium-containing oxides.

The cathode material is prepared as follows; lithium carbonate, lithium nitrate, lithium oxide or lithium hydroxide and carbonate of a transition metal, nitrate thereof, oxide thereof or hydroxide thereof are mixed so as to have a desired composition, and are pulverized and fired at temperature in a range of 600°C to 1000°C in an oxygen atmosphere.

The cathode mixture layer 21b includes a conductive agent for example, and it may include a binder if necessary. For example, carbon materials such as graphite, carbon black, or ketjen black can be used as the conductive agent and one kind, two kinds or more of the carbon materials is used to be mixed. Further, as long as materials have conductivity, materials such as metal materials or conductive high molecular weight materials may be used besides the carbon materials. For example, synthetic rubbers such as styrene-butadiene rubber, fluorine based rubber or ethylene propylene diene rubber, or high molecular weight materials such as polyvinylidene fluoride can be cited as the binder, and one kind, two kinds or more of the synthetic rubbers and the high molecular weight materials is used to be mixed. For example, as shown in FIG.1, when the cathode 21 and the anode 22 are wound around, the binder such as styrene-butadiene rubber or fluorine based rubber that has high plasticity is preferably used.

The anode 22 has a structure, for example, in which an anode mixture layer 22b is provided on both surfaces of an anode current collector 22a with a pair of facing surfaces. Although not shown in Figures, the anode mixture layer 22b may be provided on only one surface of the anode current collector 22a. The anode current collector 22a is made of metal foil such as copper foil, nickel foil or stainless foil having excellent electrochemical stability, excellent electroconductivity and mechanical strength. Above all, copper foil is the very desirable material because copper foil has high electoconductivity. The thickness of the anode current collector 22a is preferably in a range of around 6 μm to around 40 μm. The anode current collector 22a with a thinner thickness than 6 μm causes mechanical strength to decrease, causes the anode current collector 22a itself to be fractured easily in a manufacturing process and causes production efficiency to decrease. On the other hand, the anode current collector 22a with a thickness more than 40 μm causes the volume ratio of the anode current collector 22a in the battery to become larger than required, thereby has difficulty in obtaining high energy density.

The anode mixture layer 22b is comprised so as to contain one kind or two kinds or more of an anode material capable of insertion and extraction of lithium, and the binder similar to that used in the cathode mixture layer 21b may be contained if necessary. The anode mixture layer 22b has thickness in a range between 80 μm and 250 μm. When the anode mixture layer 22b is provided on both surfaces of the anode current collector 22a, the thickness of the anode mixture layer 22b is equal to the sum of the thickness of the anode mixture layers 22b provided on both surfaces of the anode current collector 22a.

In the description of the present application, a state of insertion and extraction of lithium describes a state in which lithium-ion is electrochemically inserted and extracted without loss of ionicity of the lithium-ion. Further, the state includes not only a state where the inserted lithium exists in perfect ionic state, but also a state where the inserted lithium exits in imperfect ionic state. As examples to explain such states, for example, a case where lithium is inserted through electrochemical intercalation reaction that lithium-ion exhibits to graphite and a case where lithium is inserted through forming intermetallic compounds or intermetallic alloys, can be cited.

As the anode material capable of insertion and extraction of lithium, carbon materials such as graphite, non-graphitizable carbon or graphitizable carbon are cited. The carbon materials are preferable because the crystal structure changes less at the time of charge-and-discharge, large capacity of charge-and-discharge can be obtained and excellent charge-and-discharge cycle characteristics can be obtained also. Above all, graphite is preferable so that graphite has a large electrochemical equivalent, thereby obtaining high energy density.

Graphite having 2.10 g/cm$^3$ or over in true density is preferable for example, moreover graphite having 2.18 g/cm$^3$ or over in true density is more preferable. In order to obtain the above-mentioned value in true density, it is required that thickness of a C-axis crystalline thickness of (002) plane is equal to 14.0 nm or over. Further, the spacing of (002) plane is preferably less than 0.340 nm, and more preferably in a range of 0.335 nm to 0.337 nm both inclusive.

Graphite may be natural graphite or artificial graphite. For example, artificial graphite can be obtained through conducting high-temperature heat treatment after carbonizing an organic material, then pulvering and classifying the obtained material. The high-temperature heat treatment is conducted as follows: as required, carbonizing the organic material at a temperature between 300°C and 700°C in airflow of inert-gas such as nitrogen (N$_2$), increasing the temperature from 900°C to 1500°C at a speed of 1°C per minute to 100°C per minute, then calcining the obtained material while holding the rose temperature for 0 to 30 hours, heating the obtained material at a temperature of 2000°C or over, preferably 2500°C or over, and holding the rose temperature for proper hours.

An organic material to be a starting material may be coal or pitch. Pitch includes for example, tars obtained through the pyrolysis of coal tar, ethylene-bottom-oil, crude oil or the like at high temperature, tar obtained through distilling asphalt or the like (herein, distilling means vacuum distillation, atmospheric distillation or steam distillation), conducting thermal polycondensation thereto, extracting thereto, and conducting chemical polycondensation thereto, pitch obtained during dry-distilling a wood, polyvinyl chloride resin, polyvinyl acetate, polyvinyl butyrate or 3,5-dimethylphenol resin. The above-mentioned material such as coal or pitch exists in a liquid state at an approximate maximum temperature of 400°C at which carbonization is partway, and while being hold at the temperature, aromatic-rings are condensed and poly-cyclized, and then oriented in a direction to be laminated. Then, when the temperature reaches to 500°C or over, semicokes that is a solid carbon precursor can be formed. (The sequential process is called the liquid-phase carbonization process.)

Examples of the organic material may be condensed polycyclic compounds such as naphthalene, phenanthrene, anthracene, triphenylene, pyrene, perylene, pentaphene, pentacene or the like, or derivatives thereof (for instance, carboxylic acid, carboxylic acid anhydride or carboxylic acid imide of the above-mentioned compounds), or mixed materials thereof. Further, condensed-heterocyclic compound of acenaphthylene, indole, iso-indole, quinoline, iso-quinoline, quinoxaline, phthalazine, carbazole, acridine, phenazine, phenantolidine or the like, and derivatives thereof, or mixed materials thereof may be used.

Pulveization may be performed either before and after carbonization and calcination, or during temperature-increased-process prior to graphitizing the material. Either period is applicable. In either period, heat treatment is finally conducted for the purpose of graphtization in a state of powder. However, in order to obtain graphite powder with high bulk density and excellent fracture strength, it is preferable to pulverize and classify the obtained graphitized-moleded-body after steps of molding the materials and then conducting heat treatment.

For instance, the process for preparing the graphitized-molded-body is as follows: cokes to be a filler later and a binder pitch to function as a molding agent or a sintering agent are mixed together and are molded, and a calcining step of applying a heat treatment on the molded body at a low temperature of 1000°C and below and a pitch-impregnating step of impregnating a binder pitch that is dissolved in the calcined body are repeated for several times. Then, a heat treatment at a high temperature is conducted. The impregnated binder pitch is carbonized and graphitized through the above-mentioned process of heat treatment. Incidentally, in this case, the filler (cokes) and the binder pitch are used as the starting materials, thereby being graphitized in polycrystal. Moreover, sulfur and nitrogen included in the starting materials are generated as gases at the time of heat treatment, thereby forming a minute hole where the gases are passing. Owing to the minute hole, there are advantages such that a reaction of insertion and extraction of lithium is progressed smoothly and technical treatment can be carried out quite efficiently. Also, a filler having a characteristic capable of being molded and sintered may be used as the starting material of the molded body. When such filler is used as the material, a binder pitch is not required.

A material having a spacing of (002) plane with 0.37 nm or over, true density less than 1.70 g/cm$^3$, and not showing an exothermic peak at temperature over 700 °C in differential thermal analysis (DTA) in the atmosphere is preferable as non-graphitizable carbon.

Such non-graphitizable carbon can be obtained through for example, conducting heat treatment to organic materials at around 1200°C and pulverizing and classifying the organic materials. The heat treatment is conducted as follows: as necessary, carbonizing the organic materials at the temperature of 300°C to 700°C (solid phase carbonization process), then increasing the temperature from 900°C to 1300°C at a speed from 1°C per minute to 100°C per minute and holding the increased temperature for 0 hour to 30 hours approximately. Pulverizing the organic materials may be either the period before and after carbonization is conducted or the period while the temperature is increased.

An organic material to be a starting material may be a molecular weight compound of furfuryl alcohol and furfural respectively, comolecular weight compound thereof or furan resin. Here, furan resin is comolecular weight compound of the above-mentioned high molecular weight compounds and another resin. Also, conjugated resins such as phenolic plastic, acrylic resin, vinyl halide resin, polyimide resin, polyamide-imide resin, polyamide resin, polyacetylene or poly-para-phenylene and the like, cellulose and cellulosic, coffee beans, bamboo or crustacea including chitosan and biocellulose by use of bacteria can be used. Further, a compound in which functional group containing oxygen (O) (so-called oxygen cross-linking) is introduced into petroleum pitch of which a ratio of atomicity between hydrogen atom (H) and carbon atom (C), namely atomicity ratio H/C is for example in a range from 0.6 to 0.8, can be used.

The percentage of oxygen content of the compound is preferably equal to or more than 3%, more preferably equal to or more than 5% (See Japanese Unexamined Patent Publication Hei 3-252053) . The oxygen content has effect on crystal structure of carbon materials. When the percentage of the oxygen content exceeds the above-mentioned percentage, the property of non-graphitizable carbon can be enhanced, thereby the capacity of the anode 22 can be increased. Incidentally, petroleum pitch is obtained through tar or the like obtained through the pyrolysis of coal tar, ethylene-bottom-oil, crude oil or the like at high temperature, or it is obtained through distilling asphalt or the like (herein, distilling means vacuum distillation, atmospheric distillation or steam distillation), conducting thermal polycondensation thereto, extracting thereto, and conducting chemical polycondensation thereto. Also, a method for forming oxygen cross-linking includes for example, a wet method to react aqueous solution such as nitric acid, sulfuric acid, hypochlorous acid, or mixed acid thereof with petroleum pitch, a dry method to react oxidizing gas such as air or oxygen with petroleum pitch, or a method to react a solid reagent such as sulfur, ammonium nitrate, ammonia persulfate, ferric chloride or the like with petroleum pitch.

Organic materials to be starting materials are not limited to the above materials, other organic materials may be used if the organic materials can become non-graphitizable carbon after solid phase carbonization process through oxygen cross-linking process.

For non-graphitizable carbon, it is also preferable to use the compound including phosphorus (P), oxygen and carbon as main components, which is described in Japanese Unexamined Patent Publication Hei 03-137010 so that the compound can indicate the above-mentioned parameter of the property, in addition to the compound produced by using the above-mentioned organic material as the starting material.

Anode materials capable of insertion and extraction of lithium include a metal or a semiconductor capable of forming an alloy or a compound with lithium, or an alloy or a compound of the metal or the semiconductor. The metal, the semiconductor, the alloy or the compound thereof are preferable in terms of being able to obtain high energy density. Specifically, when using them together with carbon materials, it is more preferable because advantages of both high energy density and superior cycle characteristics can be obtained.

The metal or the semiconductor includes for example tin (Sn), lead (Pb), aluminum (Al), indium (In), silicon (Si), zinc (Zn), antimony (Sb), bismuth (Bi), gallium (Ga), germanium (Ge), arsenic (As), silver (Ag), hafnium (Hf), zirconium (Zr) and yttrium (Y). The alloy or the compound of the metal or the semiconductor is expressed in chemical formulas for example, $Ma_sMb_tLi_u$ or $Ma_pMc_qMd_r$. In the chemical formulas, Ma indicates at least one kind selected from metal elements and semiconductor elements capable of forming an alloy or a compound with lithium, Mb indicates at least one kind selected from metal elements and semiconductor elements except for lithium and Ma, Mc indicates at least one kind of nonmetallic elements and Md indicates at least one kind of metal elements and semiconductor elements except for Ma. Also, the value of small letters s, t, u, p, q and r are respectively expressed in $s > 0$, $t \geqq 0$, $p > 0$, $q > 0$ and $r \geqq 0$.

Among them, metal elements of group 4B or semiconductor elements thereof, or an alloy of the metal elements or the semiconductor elements or a compound thereof are preferable. Specifically, silicon or tin, an alloy or a compound thereof is more preferable, and may be either in crystalline substance or in amorphous.

Specific examples of such the alloy or the compound are LiAl, AlSb, CuMgSb, $SiB_4$, $SiB_6$, $Mg_2Si$, $Mg_2Sn$, $Ni_2Si$, $TiSi_2$, $MoSi_2$, $CoSi_2$, $NiSi_2$, $CaSi_2$, $CrSi_2$, $Cu_5Si$, $FeSi_2$, $MnSi_2$, $NbSi_2$, $TaSi_2$, $VSi_2$, $WSi_2$, $ZnSi_2$, SiC, $Si_3N_4$, $Si_2N_2O$, $SiO_v$ ($0 < v \leqq 2$), $SnO_w$ ($0 < w \leqq 2$), $SnSiO_3$, LiSiO or LiSnO and the like.

Anode materials capable of insertion and extraction of lithium further include other metal compounds or high molecular weight materials. Herein, other metal compounds include oxides such as iron oxide, ruthenium oxide or molybdenum oxide, or $LiN_3$. High molecular weight materials include polyacethylene, polyaniline or.polypyrrole and the like.

In the secondary battery, when open-circuit voltage (namely battery voltage) is lower than overcharge voltage during the charging process, lithium metal starts to be precipitated into the anode 22. That is, lithium metal is precipitated into the anode 22 when the open-circuit voltage is lower than the overcharge voltage, and the capacity of the anode 22 is expressed by the sum of the capacity component obtained through insertion and extraction of lithium and the capacity component obtained through precipitation and dissolution of lithium. Thus, in the secondary battery, both the anode material capable of insertion and extraction of lithium and the lithium metal function as anode active materials, and the anode material capable of insertion and extraction of lithium is the base material used when precipitating lithium metal.

Herein, the overcharge voltage indicates the open-circuit voltage in a state that the battery is overcharged. For example, the open-circuit voltage indicates higher voltage than the open-circuit voltage of 'full-charged' battery, which is defined by and described in 'GUIDELINE FOR SAFETY EVALUATION ON SECONDARY LITHIUM CELLS' (SBA G1101 )that is one of guidelines of JAPAN STORAGE BATTERY ASSOCIATION (BATTERY ASSOCIATION OF JAPAN). In other words, the open-circuit voltage indicates higher voltage than the open-circuit voltage obtained after charging by the charging method so as to obtain nominal capacity of each battery, or the open-circuit voltage obtained after charging by the standard charging method or the recommended charging method. Specifically, the secondary battery is full-charged when for example the open-circuit voltage reaches to 4.2 V, and in the secondary battery, lithium metal is precipitated on a surface of the anode material capable of insertion and extraction of lithium when the open-circuit voltage is in some of a range from 0 V or over to 4.2 V or less.

Thus, the secondary battery can obtain high energy density, and improve cycle characteristics and boost charge property. In terms of precipitating lithium metal into the anode 22, the secondary battery is as well as the conventional lithium secondary battery having the anode made of lithium metal or lithium alloy. On the other hand, the following advantages can be obtained because lithium metal is precipitated on the anode material capable of insertion and extraction of lithium. It is assumed that the following advantages allow high energy density, cycle characteristics and boost charge property to be obtained.

Firstly, the conventional lithium secondary battery has difficulty in precipitating lithium metal uniformly, thereby causing deterioration of cycle characteristics. On the other hand, the anode material capable of insertion and extraction of lithium has a large surface area in general, thereby allowing lithium metal to be precipitated uniformly in the secondary battery. Secondly, the conventional lithium secondary battery has a great change in volume according to precipitation and elution of lithium metal, thereby causing deterioration of cycle characteristics. On the other hand, the secondary battery has a small change in volume because lithium metal precipitates in even interstices among grains of the anode material capable of insertion and extraction of lithium. Thirdly, in the conventional lithium secondary battery, the more the amount of precipitation and dissolution of lithium metal increases, the more serious the above-mentioned problems become. However, in the secondary battery, the insertion and extraction of lithium by using the anode material capable of insertion and extraction of lithium also contributes to the charge-and-discharge capacity. Therefore, while the secondary battery has a large battery capacity, it has a small amount of precipitation and dissolution of lithium metal. Fourthly, conducting boost charge to the conventional lithium secondary battery causes deterioration of cycle characteristics because lithium metal is precipitated unevenly. On the other hand, in the secondary battery, at the beginning of charge, lithium is inserted into the anode material capable of insertion and extraction of lithium, thereby it is possible to conduct boost charge in the secondary battery.

In order to obtain the above-mentioned advantages more effectively, for example, when the open-circuit voltage reaches to a maximum voltage before reaching to the overcharge voltage, it is preferable that a maximum amount of precipitation of lithium metal into the anode 22 is between 0.05 times and 3.0 times both inclusive, with respect to capability of charge capacity of the anode material capable of insertion and extraction of lithium. Too much amount of precipitation of lithium metal causes the same problem as in the conventional lithium secondary battery. Too less amount of precipitation of lithium metal is unable to increase charge-and-discharge capacity of the secondary battery fully. Further, for example, the anode material capable of insertion and extraction of lithium preferably has capability of discharge capacity equal to or more than 150 mAh/g so that the more capability of insertion and extraction of lithium makes the amount of precipitation of lithium metal small relatively. The capability of charge capacity of the anode material is obtained, for example, by having lithium metal as an antipole and being based on quantity of electricity occurring when the anode having the anode material as the anode active material is charged up to 0 V by a method using constant-current and constant-voltage. Subsequently, for example, the capability of discharge capacity of the anode material is obtained based on quantity of electricity occurring when the anode is discharged up to 2.5 V by a method using constant-current for 10 hours or over.

The separator 23 is made of, for example, a porous film of a synthetic resin such as polytetrafluoroethylene, polypropylene or polyethylene and the like, or a porous film of a ceramic, and the separator 23 may be in a laminated structure of two kinds or more of the porous films. Among the porous films, the porous film of polyolefin is preferable because of its superiority for preventing short-circuit and increasing safety of the secondary battery by virtue of its shutdown effect. In particular, polyethylene is preferable as a material comprising the separator 23 because polyethylene can obtain shutdown effect in a range from 100°C to 160°C both inclusive, and polyethylene has superiority in electrochemical stability. Also, polypropylene is preferable, and as long as any other resins with chemical stability are, they can be used through being comolecular weight compoundized with polyethylene or polypropylene, or being blended thereof.

The porous film of polyolefin is obtained, for example, by kneading a polyolefin composition in fused state with a low-volatile solvent in fused liquid state so as to prepare high concentration of a uniform solution of the polyolefin composition, molding the solution by a die, cooling the molded-solution so as to prepare a gel sheet, and conducting drawing of the gel sheet.

For example, low-volatile aliphatic such as nonane, decane, decalin, para-xylene, undecane, or liquid paraffin and the like, or cyclic hydrocarbon can be used as the low-volatile solvent. Regarding the percentage of the composition of the polyolefin composition and the low-volatile solvent, on a basis that the total percentage of the polyolefin composition and the low-volatile solvent is equal to 100 wt%, the polyolefin composition is preferably from 10 wt% to 80 wt% both inclusive, and further preferably from 15 wt% to 70 wt% both inclusive. Too small the percentage of the polyolefin composition causes swelling or increasing neck-in at an exit of the die at the time of molding, thereby making a preparation of the sheet difficult. On the other hand, too large the percentage of the polyolefin composition makes preparing the uniform solution difficult.

When molding high concentration of a solution of the polyolefin composition by the die, especially a sheet die, a gap is preferably from 0.1 mm to 5 mm both inclusive. Further, an extrusion temperature is preferably from 140°C to 250°C both inclusive, and a extrusion speed is preferably from 2 cm per minute to 30 cm per minute, both inclusive.

Cooling is performed until reaching to equal to or less than the gel temperature. Methods of directly contacting to cold blast, cooling water or any other cooling medium, or contacting to a roll cooled by a cooling medium, or the like can be used as cooling methods. The high concentration of a solution of the polyolefin composition extruded from the die may be taken back before or during the cooling process by a fraction from 1 to 10 both inclusive, preferably 1 to 5 both inclusive. The reason is that if the fraction is too large, neck-in becomes too large and fractures easily occur during drawing of the sheet, which is not preferable.

In order to conduct drawing of the gel sheet, it is preferable to heat the gel sheet and conduct drawing of the gel sheet through biaxial drawing by using a tentering method, a roll method, a pressing method or a combined-method thereof. Herein, concurrent secondary drawing is particularly preferable, though any one of longitudinally-laterally concurrent drawing or sequential drawing may be employed. A drawing temperature is preferably set to be in a range equal to or less than a temperature adding 10°C to the melting point of the polyolefin composition, further set to be in a range from a temperature equal to and more than a crystal dispersion temperature to a temperature less than the melting point. Too high the drawing temperature is not preferable so that it causes the resin to be fused, thereby preventing a molecular chain orientation obtained effectively through drawing. On the other hand, too low the drawing temperature causes the resin not to be softened adequately, thereby causing the film to be torn easily. Therefore, drawing with high magnification cannot be conducted.

Further, it is preferable to clean the film obtained through conducting drawing by a volatile solvent and remove a remained-low volatile solvent, after conducting drawing of the gel sheet. After cleaning the film, the film is heated or dried by blasts and the solvent for cleaning is volatilized. For example, volatilizing materials like hydrocarbon such as pentane, hexane, heptane and the like, chloride-based-hydrocarbon such as methylene chloride, carbon tetrachloride and the like, fluorocarbon such as ethane trifluoride, ether such as diethyl ether, dioxane and the like are used as the solvent for cleaning. The solvent for cleaning is selected according to the low volatile solvent, and is used by itself or by mixed with another. In order to clean the film, methods such as a method of impregnating with the volatile solvent and extracting, a method of sprinkling the volatile solvent, or a combined method thereof can be used. The solvent is cleaned until the remained-low volatile solvent in the film obtained through conducting drawing is less than 1 part by mass, with respect to 100 part by mass of the polyolefin composition.

An electrolytic solution being a liquid electrolyte is impregnated with the separator 23. The electrolytic solution includes a liquid solvent, for example, a nonaqueous solvent such as organic solvent and lithium salt being an electrolyte salt dissolved in the nonaqueous solvent. The liquid nonaqueous solvent is composed of, for example, one kind or more of a nonaqueous compound, and indicates 10.0 mPa.s or less in its intrinsic viscosity at 25°C. Herein, the liquid nonaqueous solvent may indicate 10.0 mPa.s or less in its intrinsic viscosity in a state of dissolving the electolyte salt, and when the solvent is composed of a mixture of plural kinds of nonaqueous compounds, the liquid nonaqueous solvent may indicate 10.0 mPa.s or less in its intrinsic viscosity in a state of the mixture. For example, a mixture of one kind or two kinds or more of the compound having cyclic carbonic acid ester or acyclic carbonic acid ester as a typical compound is preferable as the nonaqueous solvent.

Specifically, ethylene carbonate, propylene carbonate, butylenes carbonate, vinylene carbonate, γ-butyrolactone, γ-valerolactone, 1, 2-dimethoxyethane, tetrahydrofuran, 2-methyltetrahydrofuran, 1,3-dioxolane, 4-metyl-1,3-dioxolane, methyl acetate, methyl propionate, ethyl propionate, dimethyl carbonate, ethylmethyl carbonate, diethyl carbonate, acetonitrile, glutaronitrile, adiponitrile, methoxyacetonitrile, 3-methoxypropyronitrile, N,N-dimethylformeamide, N-methylpyrrolidinone, N-methyloxazolidinone, N,N'-dimethylimidazolidinone, nitromethane, nitroethane, sulfolane, dimethylsulfoxide, trimethyl phosphate, and a compound obtained by substituting the whole or some of hydroxyl in the above-compounds with a fluorine group may be taken as examples. In particular, it is preferable to use at least one kind of ethylene carbonate, propylene carbonate, vinylene carbonate, dimethyl carbonate or ethylmethyl carbonate in order to realize superior charge-and-discharge capacity property and charge-and-discharge cycle characteristics.

$LiA_8F_6$, $LiPF_6$, $LiBF_4$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiAlCl_4$, $LiSiF_6$, LiCl, LiBr and the like may be taken as examples of lithium salts, and one kind of them or a mixture of two kinds or more of them is used. The content (concentration) of lithium salt is preferable in a range being equal to 3.0 mol/kg or less with respect to the solvent, and further preferably, in a range being equal to 0.5 mol/kg or more, thereby enabling ionic conductance of the electrolyte solution to be increased in the above-mentioned ranges.

Instead of the electrolyte solution, a gel electrolyte in which a host high molecular weight compound holds the electrolyte solution can be used. The composition of the gel electrolyte and the structure of the host high molecular weight compound are not limited specifically, as long as the gel electrolyte is equal to 1 mS/cm or more in its ion conductance at a room temperature. The description of the electrolyte solution (that is, the liquid solvent and the electrolyte salt) is as mentioned above. Polyacrylonitrile, polyvinylidene fluoride, a comolecular weight compound of polyvinylidene fluoride and polyhexafluoropropylene, polytetrafluoroethylene, polyhexafluoropropylene, polyethylene oxide, polypropylene oxide, polyphosphazene, polysiloxane, polyvinyl acetate, polyvinyl alcohol, polymethyl methacrylate, polyacrylic acid, polymethacrylic acid, styrene-butadiene rubber, nitrile-butadiene rubber, polystyrene, or polycarbonate can be as examples of the host high molecular weight compound. In particular, in terms of electrochemical stability, the high molecular weight compound having the structure of polyacrylonitrile, polyvinylidene fluoride, polyhexafluoropropylene or polyethylene oxide is preferably used. As an additive amount of the host high molecular weight compound relative to the electrolyte solution, in general, the host high molecular weight compound corresponding to a range from 5 wt% to 50 wt% with respect to the electrolyte solution is preferably added. However, the additive amount differs according to compatibility between the host high molecular weight compound and the electrolyte solution.

Further, the content of lithium salt is preferably in a range equal to 3.0 mol/kg or less with respect to the solvent, which is as well as the electrolyte solution, further preferably in a range equal to 0.5 mol/kg or more. Herein, the solvent is the word indicating a broad conception and the solvent includes not only the liquid solvent but also the one capable of dissociation of the electrolyte salt and having ion conductivity. Therefore, when using the host high molecular weight compound having ion conductivity, the host high molecular weight compound is also included as the solvent.

The secondary battery is manufactured, for example, as follows.

First of all, for example, the cathode material capable of insertion and extraction of lithium, the conductive agent and the binder are mixed so as to prepare the cathode mixture, and the cathode mixture is dispersed in a solvent of N-methyl-2-pyrrolidone or the like so as to obtain a cathode mixture slurry in a paste state. The cathode mixture slurry is applied on the cathode current collector 21a, and is dried. Then, the cathode mixture layer 21b is formed through compression molding using a roll-presser. Thereby, the cathode 21 is fabricated.

Next, for example, the anode material capable of insertion and extraction of lithium and the binder are mixed so as to prepare the anode mixture, and the anode mixture is dispersed in a solvent of N-methyl-2-pyrrolidone or the like so as to obtain an anode mixture slurry in a paste state. The anode mixture slurry is applied on the anode current collector 22a, and is dried. Then, the anode mixture layer 22b is formed through compression molding using the roll-presser. Thereby, the anode 22 is fabricated.

Subsequently, the cathode lead 25 is attached to the cathode current collector 21a by welding or the like, and the anode 26 is attached to the anode current collector 22a by welding or the like. Then, the cathode 21 and the anode 22 are wound with the separator 23 in-between, and the tip of the cathode lead 25 is welded to the safety valve mechanism 15. Also, the tip of the anode lead 26 is welded to the battery can 11. The wound cathode 21 and anode 22 are sandwiched with a pair of the insulating plates 12 and 13 so as to be enclosed in the battery can 11. After enclosing the cathode 21 and the anode 22 in the battery can 11, the electrolyte is injected into the battery can 11, thereby impregnating the electrolyte with the separator 23. After that, the battery cover 14, the safety valve mechanism 15 and the PTC 16 are fixed to the opening end of the battery can 11 by caulking via the gasket 17. In such a manner, a secondary battery shown in FIG. 1 is formed.

The secondary battery acts as follows.

According to the secondary battery, when the secondary battery is charged, lithium-ion is extracted out of the cathode material capable of insertion and extraction of lithium that is contained in the cathode mixture layer 21b, and is inserted into the anode material through the electrolyte impregnated with the separator 23, the anode material being capable of insertion and extraction of lithium that is contained in the anode mixture layer 22b. When the secondary battery is further charged, in a state that the open-circuit voltage is lower than the overcharge voltage, the charge capacity is in excess of the capability of the charge capacity that the anode material capable of insertion and extraction of lithium possesses, thereby lithium metal starts to be precipitated on a surface of the anode material capable of insertion and extraction of lithium. Then, until finishing the charge, lithium metal continues to be precipitated on the anode 22, thereby in the case of using a carbon material as the anode material capable of insertion and extraction of lithium for example, the anode mixture layer 22b is externally changed its color of black to color of gold, and further to color of silver.

In the next, when the secondary battery is discharged, lithium metal precipitated on the anode 22 is eluted as ion and inserted into the cathode material capable of insertion and extraction of lithium that is contained in the cathode mixture layer 21b through the electrolyte impregnated with the separator 23. When the secondary battery is further discharged, lithium-ion inserted into the anode material capable of insertion and extraction of lithium in the anode mixture layer 22b is extracted, and inserted into the cathode material capable of insertion and extraction of lithium that is contained in the cathode mixture layer 21b through the electrolyte. Therefore, the secondary battery can obtain properties of both lithium secondary battery and lithium-ion secondary battery which are so-called conventional, that is, high energy density and excellent charge-and-discharge cycle characteristics.

Specifically, the embodiment allows charge-and-discharge cycle characteristics to be improved further, because in the embodiment lithium-containing oxide is included as the cathode material capable of insertion and extraction of lithium, the lithium-containing oxide being expressed in $Li_xMI_{1-y}MII_yO_2$ of Chemical Formula 1 for example.

Thus, according to the embodiment, it is possible to improve charge-and-discharge cycle characteristics so that lithium-containing oxide is included as the cathode material capable of insertion and extraction of lithium, the lithium-containing oxide being expressed in $Li_xMI_{1-y}MII_yO_2$ of Chemical Formula 1 for example.

(Examples)

Moreover, referring to FIG.1 and FIG.2, concrete examples of the invention will be described in detail.

(Examples 1 to 12)

Firstly, lithium carbonate($Li_2CO_3$) and cobalt carbonate($CoCO_3$), and at least one of aluminum hydroxide(Al$(OH)_3$) and magnesium oxide(MgO) were mixed together and calcined at 900°C for 5 hours in the air in order to obtain lithium-containing oxide $LiCo_{1-y}MII_yO_2$. At this time, the composition of the lithium-containing oxide $LiCo_{1-y}MII_yO_2$ was changed as shown in Examples 1 to 12 of Table 1. Subsequently, the lithium-containing oxide $LiCo_{1-y}MII_yO_2$ was pulverized so as to prepare a powder of 10 μm in accumulative 50% grain size obtained by laser diffraction method and make the powder as the cathode material.

Then, 95 wt% of the lithium-containing oxide powder and 5 wt% of the lithium carbonate powder were mixed together, and then 96.9 wt% of the mixture with the lithium-containing oxide powder and the lithium carbonate powder, 0.1 wt% of granular graphite of 6 μm in average grain size that was the conductive agent, and 3 wt% of polyvinylidene fluoride that was the binder were mixed together, thereby preparing the cathode mixture. After preparing the cathode mixture, the cathode mixture was dispersed in N-methyl-2-pyrrolidone as a solvent in order to obtain a cathode mixture slurry, was uniformly applied on both surfaces of the cathode current collector 21a made of strip-shaped aluminum foil of 20 μm in thickness, was dried and was compression-molded by the roll-presser in order to form the cathode mixture layer 21b, thereby preparing the cathode 21 of 180 μm in thickness. After that, the cathode lead 25 made of aluminum was mounted on one end of the cathode current collector 21a.

Also, 90 wt% of granular artificial graphite powder and 10 wt% of polyvinylidene fluoride that was the binder were mixed together in order to prepare the anode mixture. Subsequently, the anode mixture was dispersed in N-methyl-2-pyrrolidone as a solvent in order to obtain a slurry, was uniformly applied on both surfaces of the anode current collector 22a made of strip-shaped copper foil of 15 μm in thickness, was dried and was compression-molded by the roll-presser in order to form the anode mixture layer 22b, thereby preparing the anode 22 of 130 μm in thickness. Then, the anode lead 26 made of nickel was mounted on one end of the anode current collector 22a.

After preparing the cathode 21 and the anode 22 respectively, the separator 23 made of a micro porous polyethylene drawing film of 25 μm in thickness was provided, and the anode 22, the separator 23, the cathode 21 and the separator 23 was laminated in this order. The laminated body was wound like a scroll for many times so as to prepare the rolled electrode body 20 of 12.5 mm in outside diameter.

After preparing the rolled electrode body 20, a pair of the insulating plates 12 and 13 sandwiched the rolled electrode body 20, the anode lead 26 was welded to the battery can 11, the cathode lead 25 was welded to the safety valve mechanism 15, and the rolled electrode body 20 was enclosed inside the battery can 11 made of nickel-plated iron. After that, the electrolytic solution was injected into the battery can 11 by using decompression method. Herein used electrolytic solution was composed as follows: in a solvent mixed with 5 wt% of vinylene carbonate, 35 wt% of ethylene carbonate, 50 wt% of dimethyl carbonate and 10 wt% of ethylmethyl carbonate, the content 1.5 mol/kg of $LiPF_6$ as an electrolyte salt with respect to the solvent was dissolved.

After injecting the electrolytic solution into the battery can 11, the battery can 11 was caulked by the battery cover 14 via the gasket 17 of which surfaces were applied by asphalt, thereby the jelly roll shaped secondary batteries of 14 mm in diameter and 65 mm in height were obtained in Examples 1 to 12.

Regarding the obtained secondary batteries according to Examples 1 to 12, charge-and-discharge test was conducted to examine rated energy density and charge-and-discharge cycle characteristics. At this time, the secondary battery was charged until the battery voltage reached to 4.2 V at 400 mA of constant-current, and subsequently until the total time of charging the secondary battery reached to 4 hours at 4.2 V of constant-voltage. Just before an end of charging the secondary battery, the voltage and the current value between the cathode 21 and the anode 22 was respectively 4.2 V and 5 mA or lower. On the other hand, the secondary battery was discharged until the battery voltage reached to 2.75 V at 400 mA of constant-current. Incidentally, if charge-and-discharge is conducted under the conditions described here, the secondary battery can be in full-charge state and in full-discharge state.

Further, rated energy density was obtained by discharge capacity and average voltage at the second cycle, and volume of the secondary battery. Charge-and-discharge cycle characteristics was obtained by the energy density ratio at the 100th cycle with respect to the energy density at the second cycle, namely by the energy density ratio determined in a calculation (the energy density at the 100th cycle / the energy density at the second cycle) $\times$ 100. The results are shown in Table 1.

Further, regarding the secondary batteries according to Examples 1 to 12, charge-and-discharge at the first cycle under the above-described condition was conducted to the secondary batteries, and then full-charge was conducted to them again. Then, the secondary batteries were torn down in order to examine with a visual inspection and $^7$Li nuclear magnetic resonance spectroscopy if lithium metal was precipitated on the anode mixture layer 22b. Moreover, charge-and-discharge at the second cycle under the above-described condition was conducted to the secondary batteries, and then full-charge was conducted to them again. Then, the secondary batteries were torn down in order to examine likewise if lithium metal was precipitated on the anode mixture layer 22b. The results are also shown in Table 1.

As Comparative Example 1 in contrast to Examples, a secondary battery was prepared in the same manner as Examples, except for using lithium cobalt oxide $LiCoO_2$ as the cathode material. Regarding the secondary battery according to Comparative Example 1, charge-and-discharge test was also conducted in the same manner as Examples 1 to 12 so as to examine the rated energy density, the energy density ratio and if lithium metal was precipitated in full-charge state and full-discharge state. The results are also shown in Table 1.

As shown in Table 1, Examples 1 to 12 and Comparative Example 1 show that a silver-colored precipitated substance could be found on the anode mixture layer 22b in full-charge state, and a peak attributing to lithium metal could be obtained by using $^7$Li nuclear magnetic resonance spectroscopy. Namely, it was recognized that lithium metal was precipitated. Also, it was recognized that in full-charge state, the peak attributing to lithium-ion could be obtained by using $^7$Li nuclear magnetic resonance spectroscopy, and lithium-ion was inserted in an interlayer of graphite in the anode mixture layer 22b. On the other hand, in full-discharge state, the anode mixture layer 22b was in a color of black, and the silver-colored precipitated substance could not be found. Even by $^7$Li nuclear magnetic resonance spectroscopy, the peak attributing to lithium metal could not be seen. Further, the peak attributing to lithium-ion was so small that it was barely recognizable. That is, it was recognized that the capacity of the anode 22 was expressed by the sum of the capacity component of precipitation and dissolution of lithium metal and the capacity component of insertion and extraction of lithium.

Further, as shown in Table 1, in Examples 1 to 12 in which lithium-containing oxide $LiCo_{1-y}MII_yO_2$ including at least one of aluminum and magnesium was used, the higher energy density ratio could be obtained, in comparison with Comparative Example 1 in which lithium cobalt oxide $LiCoO_2$ was used. In a word, when lithium-containing oxide $LiCo_{1-y}MII_yO_2$ is used as the cathode material, charge-and-discharge cycle characteristics can be improved.

Moreover, based on the results of Examples 1 to 12, the more the content of the second element MII of lithium-containing oxide $LiCo_{1-y}MII_yO_2$ increases, the higher the energy density ratio is, and a trend such that the ratio becomes lower after indicating a maximum value can be seen. Namely, it is found that when y is in a range of $0 < y \leqq 0.1$ which means that the molar ratio of the second element in contrast to the first element (the second element / the first element) is in a range of more than 0 and 0.1 / 0.9 or lower, much effect can be obtained.

Although the invention has been described by the above-described Examples where some examples of lithium-containing oxide are described, the same results can be obtained even by use of other compositions, as long as lithium-containing oxide described in the embodiment is used.

Although the invention has been described by the foregoing embodiment and examples, the invention is not limited to the embodiment and the examples, but can be variously modified. For example, in the embodiment and the examples, the case of using the reaction of insertion and extraction of lithium and the reaction of precipitation and dissolution of lithium is described. However, an alloy may be formed when lithium is precipitated. In this case, a substance capable of forming an alloy with lithium may exist in an electrolyte and it may form the alloy when lithium is precipitated. Also, the substance capable of forming an alloy with lithium may exist in the anode and it may form the alloy when lithium is precipitated.

Although the embodiment and the examples describe the case of using lithium as the material reacting to the electrode, other materials also may be included. For example, alkali metals such as sodium (Na), potassium (K), alkaline-earth metals such as magnesium (Mg), calcium (Ca), or other light metals such as aluminum (Al) can be as the other materials.

Although the embodiment and the examples describe the case of using the gel electrolyte that is one kind of the electrolytic solution or the solid electrolyte, other electrolytes may be used. For example, organic solid electrolyte in which the electrolyte salt is dispersed into high molecular weight compound having ion conductivity, inorganic solid electrolyte including ion conduction ceramics, ion conduction glass, ionic crystal and the like, or the mixture of the inorganic solid electrolytes and an electrolyte, or the mixture of the inorganic solid electrolytes and, the gel electrolyte or the organic solid electrolyte can be as other electrolytes.

Moreover, although the embodiment and the examples describe the cylindrical secondary battery having the wound structure, the invention can be also applied to an elliptic type or a polygonal type secondary battery having the wound structure, or a secondary battery having a structure of folding or laminating the cathode or the anode. Further, the invention can be also applied to a secondary battery with a coin-shaped, a button-shaped, a card-shaped and the like. Additionally, the invention can be applied to not only a secondary battery but also a primary battery as well.

As described, according to the cathode material of the invention, the cathode material contains lithium-containing oxide, which includes lithium, a first element consisting of either cobalt (Co) or nickel (Ni), a second element that is at least one kind from the group consisting of transition metal elements except for the first element, and oxygen (O). Or, according to the battery of the invention, the battery contains the cathode material of the invention. Thereby, charge-and-discharge cycle characteristics can be improved.

Specifically, according to the cathode material or the battery of one aspect of the invention, the second element includes at least one kind from the group consisting of magnesium (Mg) and aluminum (Al). Or, according to the cathode material or the battery of another aspect of the invention, a molar ratio of the second element in contrast to the first element (the second element / the first element) is in a range of more than 0 and 0.1 /0.9 or lower. Thereby, excellent charge-and-discharge cycle characteristics can be obtained.

Obviously many modifications and variations of the present invention are possible in the light of the above teachings. It is therefore to be understood that within the scope of the appended claims the invention may be practiced otherwise than as specifically described.

Table 1

| | $LiCo_{1-y}MII_yO_2$ | | RATED ENERGY DENSITY (Wh/l) | DENSITY RATIO (%) | PRECIPITATION OF Li METAL | |
|---|---|---|---|---|---|---|
| | MII | y | | | FULL-CHARGE | FULL-DISCHARGE |
| Example 1 | $(Al_{0.4}Mg_{0.6})$ | 0.005 | 455 | 93.3 | Found | Not Found |
| Example 2 | $(Al_{0.8}Mg_{0.2})$ | 0.01 | 453 | 93.2 | Found | Not Found |
| Example 3 | $(Al_{0.5}Mg_{0.5})$ | 0.02 | 454 | 93.1 | Found | Not Found |
| Example 4 | $(Al_{0.3}Mg_{0.7})$ | 0.05 | 456 | 92.9 | Found | Not Found |
| Example 5 | Al | 0.005 | 455 | 92.9 | Found | Not Found |
| Example 6 | Al | 0.01 | 457 | 93.2 | Found | Not Found |
| Example 7 | Al | 0.02 | 458 | 93.3 | Found | Not Found |
| Example 8 | Al | 0.05 | 451 | 93.2 | Found | Not Found |
| Example 9 | Mg | 0.005 | 452 | 91.9 | Found | Not Found |
| Example 10 | Mg | 0.01 | 452 | 92.0 | Found | Not Found |
| Example 11 | Mg | 0.02 | 454 | 92.0 | Found | Not Found |
| Example 12 | Mg | 0.05 | 453 | 91.8 | Found | Not Found |
| Comparative 1 Example | - | 0 | 453 | 89.1 | Found | Not Found |

**Claims**

1. A cathode material, used in a battery comprising a cathode, an anode and an electrolyte where the capacity of the anode includes a sum of a capacity component obtained through insertion and extraction of lithium (Li) and a capacity component obtained through precipitation and dissolution of lithium, wherein the cathode material contains lithium-containing oxide, which includes lithium, a first element consisting of either cobalt (Co) or nickel (Ni), a second element that is at least one kind from the group consisting of transition metal elements except for the first element, and oxygen (O).

2. A cathode material as claimed in claim 1, wherein the second element includes at least one kind from the group consisting of magnesium (Mg) and aluminum (Al).

3. A cathode material as claimed in claim 1, wherein a molar ratio of the second element in contrast to the first element (the second element / the first element) is in a range of more than 0 and 0.1 /0.9 or lower.

4. A cathode material as claimed in claim 1, wherein the lithium-containing oxide is expressed in Chemical Formula 2.

(Chemical Formula 2)

$$Li_xMI_{1-y}MII_yO_2$$

(In Chemical Formula 2, MI and MII indicate a first element and a second element, respectively. Small letters x and y indicate a value in a range of $0.2 < x \leqq 1.2$ and a value in a range of $0 < y \leqq 0.1$, respectively.)

5. A battery comprising a cathode, an anode and an electrolyte, wherein the capacity of the anode includes a sum of a capacity component obtained through insertion and extraction of lithium (Li) and a capacity component obtained through precipitation and dissolution of lithium, and the cathode contains lithium-containing oxide, which includes lithium, a first element consisting of either cobalt (Co) or nickel (Ni), a second element that is at least one kind from the group consisting of transition metal elements except for the first element, and oxygen (O).

6. A battery as claimed in claim 5, wherein the second element includes at least one kind from the group consisting of magnesium (Mg) and aluminum (Al).

7. A battery as claimed in claim 5, wherein a molar ratio of the second element in contrast to the first element (the second element / the first element) is in a range of more than 0 and 0.1 /0.9 or lower.

8. A battery as claimed in claim 5, wherein the lithium-containing oxide is expressed in Chemical Formula 3.

(Chemical Formula 3)

$$Li_xMI_{1-y}MII_yO_2$$

(In Chemical Formula 3, MI and MII indicate a first element and a second element, respectively. Small letters x and y indicate a value in a range of $0.2 < x \leqq 1.2$ and a value in a range of $0 < y \leqq 0.1$, respectively.)

9. A battery as claimed in claim 5, wherein the anode includes an anode material capable of insertion and extraction of lithium.

10. A battery as claimed in claim 9, wherein the anode includes a carbon material.

11. A battery as claimed in claim 10, wherein the anode includes at least one kind from the group consisting of graphite, graphitizable carbon and non-graphitizable carbon.

12. A battery as claimed in claim 11, wherein the anode includes graphite.

13. A battery as claimed in claim 9, wherein the anode includes at least one kind from the group consisting of a metal, a semiconductor capable of forming an alloy or a compound with lithium, an alloy of the metal and the semiconductor and a compound thereof.

14. A battery as claimed in claim 13, wherein the anode includes at least one kind from the group consisting of single substance of tin (Sn), lead (Pb), alumnum (Al), indium (In), silicon (Si), zinc (Zn), antimony (Sb), bismuth (Bi), cadmium (Cd), magnesium (Mg), boron (B), gallium (Ga), germanium (Ge), arsenic (As), silver (Ag), hafnium (Hf), zirconium (Zr) and yttrium (Y), the group consisting of an alloy thereof and the group consisting of a compound thereof.

FIG. 1

FIG. 2

**EP 1 369 940 A1**

## INTERNATIONAL SEARCH REPORT

| International application No. |
|---|
| PCT/JP02/02408 |

**A. CLASSIFICATION OF SUBJECT MATTER**
Int.Cl$^7$ H01M4/58, H01M4/02, H01M10/40

According to International Patent Classification (IPC) or to both national classification and IPC

**B. FIELDS SEARCHED**

Minimum documentation searched (classification system followed by classification symbols)
Int.Cl$^7$ H01M4/58, H01M4/02

Documentation searched other than minimum documentation to the extent that such documents are included in the fields searched

| | | | |
|---|---|---|---|
| Jitsuyo Shinan Koho | 1926-2002 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 11-7944 A  (Matsushita Electric Industrial Co., Ltd.), 12 January, 1999 (12.01.99), Par. Nos. [0047] to [0069] & EP 874410 A2  (Matsushita Electric Industrial Co., Ltd.), 28 October, 1998 (28.10.98), Page 4, line 11 to page 5, line 54 | 1 |
| X | JP 11-73965 A  (Matsushita Electric Industrial Co., Ltd.), 16 March, 1999 (16.03.99), Par. Nos. [0026] to [0045] & EP 886332 A1  (Matsushita Electric Industrial Co., Ltd.), 23 December, 1998 (23.12.98), Page 5, line 24 to page 7, line 8 | 1 |

☒ Further documents are listed in the continuation of Box C.　　☐ See patent family annex.

| | |
|---|---|
| * Special categories of cited documents: <br> "A" document defining the general state of the art which is not considered to be of particular relevance <br> "E" earlier document but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| 28 May, 2002 (28.05.02) | 11 June, 2002 (11.06.02) |

| Name and mailing address of the ISA/ <br> Japanese Patent Office | Authorized officer |
|---|---|
| Facsimile No. | Telephone No. |

Form PCT/ISA/210 (second sheet) (July 1998)

16

**INTERNATIONAL SEARCH REPORT**

| International application No. |
| --- |
| PCT/JP02/02408 |

C (Continuation). DOCUMENTS CONSIDERED TO BE RELEVANT

| Category* | Citation of document, with indication, where appropriate, of the relevant passages | Relevant to claim No. |
| --- | --- | --- |
| X | JP 10-312807 A (Kabushiki Kaisha Toshiba), 24 November, 1998 (24.11.98), Par. Nos. [0008], [0018] & US 6156457 A (Kabushiki Kaisha Toshiba), 05 December, 2000 (05.12.00), Column 2, lines 15 to 25; column 4, lines 27 to 38 | 1 |
| A | JP 6-338345 A (Matsushita Electric Industrial Co., Ltd.), 06 December, 1994 (06.12.94), Full text (Family: none) | 1 |

Form PCT/ISA/210 (continuation of second sheet) (July 1998)

## INTERNATIONAL SEARCH REPORT

| International application No. |
| --- |
| PCT/JP02/02408 |

**Box I    Observations where certain claims were found unsearchable (Continuation of item 1 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box II    Observations where unity of invention is lacking (Continuation of item 2 of first sheet)**

This International Searching Authority found multiple inventions in this international application, as follows:

   (See extra sheet)

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.:

**Remark on Protest**    ☐    The additional search fees were accompanied by the applicant's protest.

   ☐    No protest accompanied the payment of additional search fees.

Form PCT/ISA/210 (continuation of first sheet (1)) (July 1998)

**INTERNATIONAL SEARCH REPORT**

International application No.

PCT/JP02/02408

Continuation of Box No.II of Continuation of first sheet (1)

In order that a group of inventions in claims satisfy requirements of invention unity, there must exist a special technical feature for so linking the group of inventions as to form a single general inventive concept.

It is examined whether the subject matter of claim 1 "A positive electrode material characterized by being used for a battery wherein the positive electrode and negative electrode comprise an electrolyte, and wherein the negative electrode capacity includes the sum of the capacity component by the occlusion and separation of lithium (Li) and a capacity component by the deposition and dissolution of lithium, and by containing a lithium-containing oxide containing a first element consisting of either one of lithium and cobalt(Co) or nickel (Ni), a second element being at least one kind in a group consisting of transition metals other than the first element and oxygen (O) can be a special technical feature.

The subject matter "When charging/discharging a battery comprising a positive electrode containing a lithium-containing oxide including Li, Ni, and Al and a negative electrode consisting of graphite, metallic glossy lithium is deposited on the surface of the negative electrode" is described in a prior art document such as JP11-773965 A (Matsushita Electric Industrial Co., Ltd.) 1999. 03. 16, JP 11-7944 A (Matsushita Electric Industrial Co., Ltd.) 1999. 01. 12. Graphite has a lithium capacity by occlusion emission and a capacity by lithium metal deposition. Therefore, this subject matter cannot be distinguished from the invention of claim 1.

The subject matter "When a secondary battery comprising a negative electrode containing carbon substance is quickly charged or charged under a low-temperature environment of 0 ° C or less, the charge potential of the negative electrode decreases below 0V, and metal lithium deposits on the carbon aceous substance." is described in a prior art document such as JP 10-3312807 A (Toshiba Corp.) 1998. 11. 24. It depends upon a battery user charging condition whether the negative electrode capacity includes the capacity component by the occlusion and separation of lithium and the capacity component by the eposition and dissolution of lithium. Therefore, the invention of claim 1 cannot be distinguished from the invention of JP 10-312807 A which discloses a positive electrode containing a lithium-containing oxide including Li, Ni, Co.

Thus, the technical feature of the invention of invention in claim 1 is not novel and therefore cannot be a special technical feature.

Therefore, there is no special technical feature among a group of the inventions described in claims 1-14 for so linking the group of inventions as to form a single general inventive concept. Therefore, a group of inventions of claims 1-14 do not satisfy the requirements of unity of invention.

The number of groups of inventions, i.e., the number of inventions so linked as to form a general inventive concept of claims of this International Application is examined. Claims of this International Application describe 13 inventions divided into groups: 1, 2, 3, 4, 5, 6, 7, 8, 9, 10, 11, 12, 13-14. Herein, claims 10 and 13 are the dependent claims of claim 9, claim 11 that of claim 10, and claim 12 that of claim11. The technical feature of claim 9 "a negative electrode contains a negative electrode material capable of the occlusion and dissolution of lithium", that of claim 10 "a negative electrode contains a carbon material", and that of claim 11 "a negative electrode contains at least one kind in a group consisting of graphite, easily gnaphitizable carbon, and difficulitly graphitizable carbon" are the subject matters described in prior art document such as JP 11-73965 A, JP 11-7944 A, and JP 10-312807 A, and is not novel and therefore cannot be a special technical feature.

Form PCT/ISA/210 (extra sheet) (July 1998)

| INTERNATIONAL SEARCH REPORT | International application No. |
|---|---|
| | PCT/JP02/02408 |

Continuation of Box No.II of Continuation of first sheet (1)

There is no other technical feature for so linking these inventions.
    Consequently, claims of this International Application describe 13
inventions divided into groups: 1, 2, 3, 4, 5, 6, 7, 8, 9, 10, 11, 12,
13-14.

Form PCT/ISA/210 (extra sheet) (July 1998)